# EUROPÄISCHE PATENTSCHRIFT

(11) **EP 3 338 961 B1**
(45) Veröffentlichungstag und Bekanntmachung des Hinweises auf die Patenterteilung: **09.09.2020**
(21) Anmeldenummer: 17205593.1
(22) Anmeldetag: 06.12.2017
(51) Int. Cl.: B25J 3/04, B25J 13/02

(54) **VORRICHTUNG ZUM STEUERN EINES ROBOTERS UND ROBOTER FÜR DIE HOCHDRUCKREINIGUNG MITTELS WASSER**
DEVICE FOR CONTROLLING A ROBOT AND ROBOT FOR HIGH PRESSURE CLEANING USING WATER
DISPOSITIF DE COMMANDE D'UN ROBOT ET ROBOT POUR LE NETTOYAGE HAUTE PRESSION À L'EAU

(30) Priorität: 23.12.2016 DE 102016015426
(43) Veröffentlichungstag der Anmeldung: 27.06.2018
(73) Patentinhaber: Boll Automation GmbH, 63839 Kleinwallstadt (DE); Buchen Umweltservice GmbH, 50735 Köln (DE)
(72) Erfinder: Radu, Branislav, 53783 Eitorf (DE); Noack, Jens, 50374 Erfstadt (DE); Beforth, Florian, 40789 Monheim am Rhein (DE); Ebach, Matthias, 57589 Pracht (DE); Beck, Rüdiger, 63840 Hausen (DE); Helmstetter, Kai, 63834 Sulzbach (DE); Peters, André, 63843 Niedernberg (DE)
(74) Vertreter: Patentanwälte Bauer Vorberg Kayser

(56) Entgegenhaltungen:
- WO-A1-2012/080694
- CN-U- 204 277 998
- JP-U- S55 103 188
- US-A- 4 914 976
- US-A- 5 379 663
- US-A1- 2005 075 739
- US-A1- 2005 093 821
- US-A1- 2014 216 192
- US-B1- 6 508 058

## Beschreibung

Die Erfindung betrifft eine Vorrichtung zum Steuern eines Roboters, der für die Hochdruckreinigung mittels Wasser eingesetzt ist, und einen Roboter, wobei sich in eine Roboterhand des Roboters eine Düse für den Ausstoß von Wasser unter Hochdruck befindet.

Derartige Steuervorrichtungen werden auch als Roboter-Bediengerät oder Roboter-Steuergerät bezeichnet. Sie dienen der Steuerung eines Roboters durch einen Menschen und sind daher ein Mensch-Maschine- Interface. Aus dem Stand der Technik sind berührungssensitive Bedienpanels mit Schaltflächen bekannt, hierzu wird beispielsweise auf DE 10 2015 206 578 B3 verwiesen. Derartige Steuermittel erlauben nur die Steuerung einer Bewegung gleichzeitig im Koordinatensystem des Werkzeugmittelpunktes (TCP) des Roboters durchzuführen. Für eine Bedienperson ist das Umdenken in das Koordinatensystem des TCP und die Bedienung der Schaltflächen ausgesprochen herausfordernd, die Beschränkung auf nur eine Bewegungsrichtung zur gleichen Zeit macht kontinuierliche Bewegungsabläufe nahezu unmöglich. Aus der DE 10 2010 106 448 B4 sind ein weiteres Steuergerät und Verfahren zum Bedienen eines Industrieroboters bekannt.

Aus WO 2012/080694 A1 ist eine Vorrichtung zum Steuern eines Roboters bekannt, dessen Roboterhand insbesondere mit einem chirurgischen Instrument verbunden ist, die Vorrichtung weist auf
- ein Halteteil,
- eine mit dem Halteteil verbundene Unterarmplatte, die gegenüber dem Halteteil in der x-y-Ebene bewegbar ist,
- mindestens einen Sensor für das Erfassen einer Bewegung der Unterarmplatte in der x-y-Ebene gegenüber dem Halteteil,
- einen Steuerhebel, der gegenüber der Unterarmplatte zumindest eine, vorzugsweise mehrere der folgenden Bewegungen durchführt
   - eine Kippbewegung um die x-Richtung und/oder um die y-Richtung,
   - eine Verschiebebewegung in z-Richtung, und
   - eine Drehbewegung um die z-Richtung, und
- Sensoren für die Erfassung der Bewegungen des Steuerhebels gegenüber der Unterarmplatte.

Als Alternative bieten sich Mäuse als Steuervorrichtung an, insbesondere 6D-Mäuse. Auch deren Bedienung erfordert jedoch einen hohen Lernaufwand und ein Umdenken der in die Maus eingegebenen Steuerbefehle in die tatsächlich erfolgende Bewegung des Roboters.

Unter Hochdruck wird im allgemeinen Wasser mit einem Druck von mindestens 800 bar, vorzugsweise höher, beispielsweise über 1.000 oder auch über 1.500 bar verstanden. Die Hochdruckreinigungsvorrichtung arbeitet mit einem Druck von mindestens 500 bar.

Bei der Hochdruckreinigung wird mit Wasserstrahlen gearbeitet, die aus einer Düse austreten und aufgrund des hohen Drucks einen sehr hohen Impuls haben können. Es sind daher besondere und hohe Sicherheitsvorschriften zu beachten. Ohne ausreichenden Schutz können Wasserstrahlen im Hochdruckbereich für eine Person sehr gefährlich sein. So schreibt die bundesgenossenschaftliche Regel BGR 500 u.a. das Tragen besonderer Schutzkleidung für diejenigen Personen vor, die sich in unmittelbarer Nähe des Reinigungsvorgangs befinden. Aber auch mit Schutzkleidung ist der Einsatz von Hochdruckgeräten immer mit einem hohen Risiko behaftet, Verletzungen können nie ganz ausgeschlossen werden. Zudem ist die Bedienung eines Hochdruckreinigungsgerätes aufgrund der enormen Kräfte, die die freiwerdenden Wasserstrahlen ausüben, eine schwere körperliche Arbeit, die eine Belastung für das Personal darstellt, zumal für Personal in Schutzkleidung. Die Schutzkleidung hindert bei der körperlichen Arbeit. Man geht daher zunehmend zu Reinigungsvorrichtungen über, die keinen Aufenthalt einer Person in unmittelbarer Nähe erfordern, sondern ferngesteuert werden können bzw. automatisiert sind. Dann muss die Bedienperson keinen Schutzanzug mehr tragen, sie kann in einer Kabine geschützt und in ausreichender Entfernung vom eigentlichen Reinigungsvorgang arbeiten und alle notwendigen Schritte durchführen. Die Strahlarbeiten finden in der Regel in einem abgesperrten Bereich oder vorzugsweise in einem geschlossenen Raum statt. Für das Führen der Düse eignen sich Industrieroboter, da sie einen großen Bewegungsspielraum ermöglichen, insbesondere wenn sie als 6-achsige Roboter ausgeführt sind. Die Bedienperson kann von einem geschützten Bereich aus den Roboter steuern.

Bei Strahlarbeiten treten auch erhebliche Rückstoßkräfte auf, sie können im Bereich oberhalb 40 kg liegen. Für eine Bedienperson stellen derartige Kräfte zumindest auf Dauer eine Herausforderung dar. Für einen ausreichend dimensionierten Roboter ist es jedoch kein Problem, den Strahl immer und auch über längere Zeit exakt zu positionieren.

Aus DE 10 2013 000 167 A1 ist eine mobile Hochdruckreinigungsvorrichtung bekannt. Sie weist einen Roboter auf. Der genannte Stand der Technik und die oben beschriebenen Merkmale gehören zur Erfindung.

Aufgabe der Erfindung ist es, die Nachteile der vorbekannten Steuervorrichtungen zu vermeiden und eine Steuervorrichtung anzugeben, bei der die auszuführenden Steuerbewegungen ähnlicher den vom Roboter ausgeführten Bewegungen möglichst ähnlich sind und die geringere Anforderungen an das Einlernen stellen.

Diese Aufgabe wird gelöst durch die Vorrichtung gemäß Anspruch 1.

Bei diesem Steuergerät wird nicht nur die Bewegungsmöglichkeit der Hand einschließlich der Finger ausgenutzt, vielmehr wird zusätzlich die Bewegung des Unterarms zur Steuerung benutzt. Die Hand kann unabhängig vom Unterarm bewegt werden, dies nutzt die Erfindung aus. Durch die Bewegung des Unterarms werden zumindest die Bewegungen der Roboterhand nach vorn und zurück sowie nach links und rechts gesteuert. Es kann auch die Bewegung von oben nach unten so gesteuert werden. Eine Schiebebewegung des Unterarms wird in eine Verschiebebewegung der Roboterhand umgesetzt. Beides sind translatorische Bewegungen. Ein Vorteil der Erfindung liegt darin, dass translatorische Bewegungen der Roboterhand durch translatorische Bewegungen der Steuervorrichtung gesteuert werden. Auch die Steuerung der Roboterhand von oben nach unten erfolgt vorzugsweise durch eine translatorische Bewegung, zum Beispiel durch ein Verschieben des Steuerhebels in vertikaler Richtung. Dagegen können die Drehbewegungen der Roboterhand durch Drehbewegungen, gegebenenfalls auch durch Kippbewegungen des Steuerhebels ausgelöst werden.

Die klare Trennung von Verschiebebewegungen und Drehbewegungen schon im Bereich der Steuervorrichtung ermöglicht eine wesentlich vereinfachte Bedienung. Das Einlernen wird deutlich verkürzt. Der Roboter bewegt sich so, wie man es normal und intuitiv erwarten würde. Der Roboter ist ohne einschlägige Kenntnisse über spezielle Koordinatensysteme bedienbar. Es muss kein Umdenken von einem System in ein anderes stattfinden.

Eine Bewegung des Unterarms kann gleichzeitig mit und unabhängig von einer Bewegung der Hand einschließlich der Finger, die den Steuerhebel bedient, erfolgen. Auf diese Weise können überlagerte Bewegungen ausgelöst werden.

Die translatorische Bewegung wird vorzugsweise durch ein Weg-Messsystem erfasst. Als Sensoren für die Erfassung der Bewegung der Unterarmplatte eignen sich vorzugsweise Weg-Messsysteme. Vorzugsweise ist das Messsystem für die z-Richtung auf das Messsystem für die y-Richtung aufgebracht, dieses ist vorzugsweise wiederum auf das Messsystem für die x-Richtung aufgebracht. Drehbewegungen werden mit Meßvorrichtungen nach dem Stand der Technik erfasst.

Die Erfindung ermöglicht es, mit nur einem Arm komplett den Roboter zu bedienen. Ein zusätzliches Bediensystem, zum Beispiel zwei separate Bedieneinrichtungen, sind nicht notwendig. Insbesondere ist es nicht notwendig, mit einer Hand die translatorischen Bewegungen zu steuern und mit der anderen Hand die Drehbewegungen.

Vorzugsweise ist ein Taster für eine Zustimmung vorgesehen, der ganz oben auf dem Steuerhebel angeordnet ist. Erst durch Betätigen dieses Tasters wird überhaupt eine Bewegung freigegeben. Wird der Taster losgelassen, stoppt der Roboter sofort. Der Taster kann auch als Schalter ausgeführt sein.

Vorzugsweise gibt die Steuervorrichtung sechs analoge Sensorsignale ab. Diese werden vorzugsweise mithilfe einer SPS eingelesen und innerhalb eines Netzes in die vom Roboter benötigten Positioniersignale umgerechnet. Dies geht praktisch ohne Zeitaufwand und ohne Zeitverlust. Der Roboter reagiert ohne spürbare Verzögerung auf die Eingaben des Nutzers.

Vorzugsweise weist der Steuerhebel einen Kopf und einen Stumpf auf. Der Kopf ist oberhalb des Stumpfes. Kopf und Stumpf sind bewegbar. Der Kopf ist vom Stumpf getragen und gegenüber dem Stumpf um die z-Richtung drehbar angeordnet, aber ansonsten nicht gegenüber dem Stumpf bewegbar. Dies ermöglicht es, den Steuerhebel nur durch Anfassen des Kopfes zu bewegen, der Stumpf muss nicht angefasst werden. Schließlich weist der Steuerhebel noch eine Basis auf, die fest mit der Unterarmplatte verbunden ist. Gegenüber dieser Basis ist der Stumpf bewegbar.

Der Steuerhebel weist eine höchste Stelle auf, die vorzugsweise in z-Richtung mindestens 3-10 cm höher ist als die mindestens eine Auflage. Die höchste Stelle ist vorzugsweise durch den Taster realisiert. Die höhere Anordnung entspricht der Anatomie eines Menschen besser.

Ebenso entspricht es der Anatomie eines Menschen besser, wenn vorzugsweise der Steuerhebel in der x-y-Ebene um 2-10 cm gegenüber einer Längsachse der mindestens einen Auflage in y-Richtung versetzt angeordnet ist. Insbesondere ist er für eine rechtsarmige Vorrichtung bei Blickrichtung von der Auflage zum Steuerhebel nach links gegenüber der Längsachse der mindestens einen Auflage versetzt angeordnet.

Vorzugsweise hat die Vorrichtung Sensoren für jede einzelne der Auslenkbewegungen der Unterarmplatte und des Steuerhebels, wobei jeweils ein Sensor vorgesehen ist, der das Maß einer Auslenkung aus der Nullstellung bzw. der Neutralstellung erfasst. Vorzugsweise wird nicht nur das Maß der Auslenkung, sondern auch die Geschwindigkeit der Auslenkung erfasst. Dies gilt insbesondere für die Drehbewegung des Kopfes, dadurch kann die Geschwindigkeit gesteuert werden, mit der sich der Roboter tatsächlich bewegt.

Der Einsatz eines Roboters für Reinigungsaufgaben ist besonders dann wirtschaftlich sinnvoll, wenn eine größere Zahl von Gleichteilen gereinigt werden muss. Hier liegen besondere Vorzüge eines Roboters, denn seine Steuerung für die Reinigung eines ersten der Gleichteile kann abgespeichert werden, die anderen Gleichteile können dann entsprechend gereinigt werden.

Weitere Vorteile und Merkmale der Erfindung ergeben sich aus den übrigen Ansprüchen sowie der nun folgenden Beschreibung eines nicht einschränkend zu verstehenden Ausführungsbeispiels der Erfindung, das im Folgenden unter Bezugnahme auf die Zeichnung näher erläutert wird. In dieser Zeichnung zeigen:
- Fig. 1:: eine perspektivische Darstellung einer Vorrichtung zum Steuern eines Roboters, die an einem Tisch befestigt ist, auf dem sich zudem ein Monitor befindet,
- Fig. 2:: die Vorrichtung gemäß Fig. 1 als solche, in perspektivischer Darstellung, und
- Fig. 3:: eine Draufsicht auf eine Reinigungsvorrichtung, gesehen von oben in negativer z-Richtung.

Für die Beschreibung wird ein rechtshändiges x-y-z-Koordinatensystem verwendet. Die x-y-Ebene liegt in der Horizontalen, die z-Achse geht vertikal nach oben.

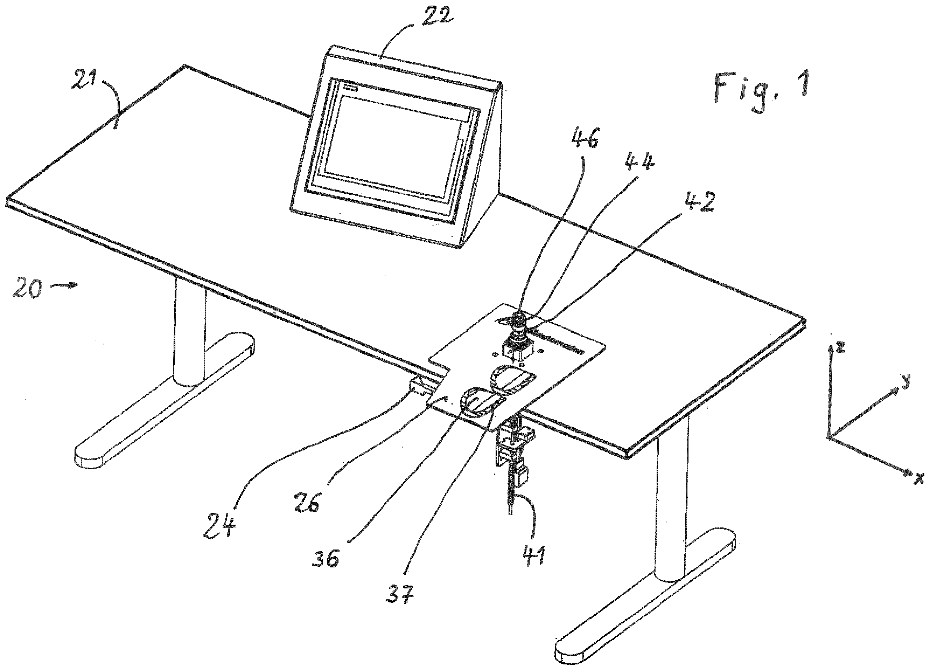

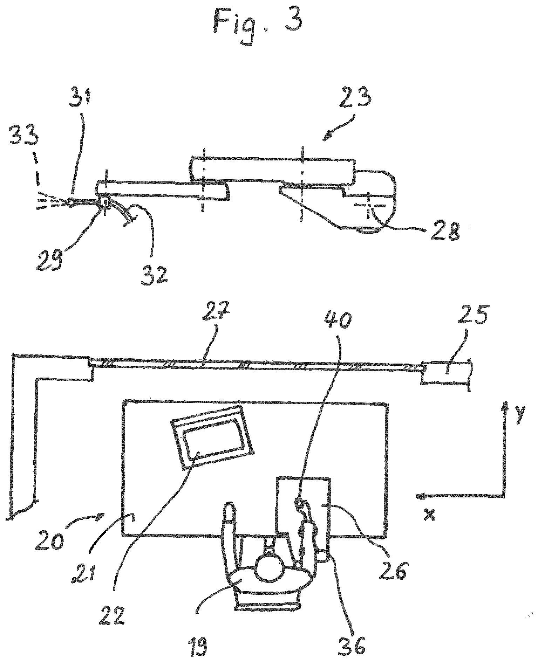

Aus Fig. 1 und 3 ist ein Tisch 20 erkennbar, an dem eine Bedienperson 19 Platz nehmen kann, siehe Fig. 3. Eine Tischplatte 21 des Tisches 20 verläuft in der Horizontalen, also in der x-y Ebene. Eine Vorderkante des Tisches 20 verläuft in x-Richtung, eine Seitenkante des Tisches 20 in y-Richtung. Auf dem Tisch 20 befindet sich ein Monitor 22. Auf ihm werden zusätzliche Angaben über einen Roboter 23 angezeigt, der mittels der Vorrichtung gesteuert wird. Weiterhin können auf dem Monitor 22 Tasten angezeigt und benutzt werden, um Vorgänge zu steuern, beispielsweise Wasser an/aus.

Vorzugsweise ist der Tisch 20 so ausgerichtet, dass die y-Achse parallel zu einer Vorwärtsbewegung des Roboters 23 ist, die x-Achse ist dann parallel zu einer Seitwärtsbewegung des Roboters 23. Der Roboter wird dann vom Bediener von hinten oder von vorn gesehen.

In Fig. 3 ist die x-Achse parallel zu einer Vorwärtsbewegung des Roboters 23. Die y-Achse steht parallel zu einer Seitwärtsbewegung des Roboters 23. Der Roboter 23 wird von dem Bediener 19 von der Seite gesehen. Der Bediener 19 befindet sich in einer Kabine 25, die ein großes Fenster 27 zum Roboter 23 hat. Der Roboter 23 befindet sich in y-Richtung vor dem Tisch 20 und vor dem Fenster 27. Letzteres verläuft parallel zur x-z-Ebene.

Es ist möglich, dass der Bediener 19 den Roboter 23 nicht direkt, wie oben angenommen, sieht, sondern eine Kamera verwendet wird, mit der Bilder auf einem Bildschirm erzeugt werden, auf dem zumindest die Roboterhand zu sehen ist. Die Steuerung erfolgt dann über das Bild, das angezeigt wird. Auch insoweit ist eine Ausrichtung der Achse der Vorwärtsbewegung des Roboters parallel zur x-Richtung oder y-Richtung vorteilhaft.

Der Roboter 23 ist um eine Drehachse 28 schwenkbar. Er hat eine Roboterhand 29, die eine Düse 31 trägt. Sie ist mit einem Hochdruckschlauch 32 verbunden. Aus der Düse 31 tritt Wasser 33 unter Hochdruck aus.

Die Vorrichtung zum Steuern ist an der Tischplatte 21 des Tisches 20 lösbar befestigt. Hierzu dient ein Halteteil 24, das mit der Tischplatte 21 verbunden ist. Die Tischplatte 21 kann einen Ausschnitt oder eine Ausnehmung aufweisen, die für das Halteteil 24 und die Vorrichtung passend ist.

Die Vorrichtung hat weiterhin eine vom Halteteil 24 getragene Unterarmplatte 26, die elastisch gegenüber dem Halteteil 24 in eine Nullstellung vorbelastet ist und aus dieser Nullstellung gegenüber dem Halteteil 24 in der x-y-Ebene bewegbar ist. Beispielsweise ist die Unterarmplatte in einer Längsführung geführt, die eine Bewegung in x-Richtung zulässt. Es ist eine weitere Längsführung vorgesehen, die eine Bewegung in der y-Richtung zulässt. Beide Längsführungen sind übereinander angeordnet und können unabhängig voneinander betätigt werden. Dadurch kann die Unterarmplatte 26 innerhalb eines vorgegebenen Bereichs in der x-y-Ebene an beliebige Positionen verfahren werden. In die Nullstellung wird die Unterarmplatte 26 durch nicht dargestellte Federn vorbelastet, die sie in die aus Figur 1 ersichtliche Nullstellung ziehen. Vorzugsweise kann die Unterarmplatte 26 aus der Nullstellung um den gleichen Betrag in positiver x-Richtung wie in negativer x-Richtung gegenüber dem heute Teil 24 verschoben werden. Gleiches gilt für die Verschiebung in positiver und negativer y-Richtung.

Die Unterarmplatte 26 ist vorzugsweise relativ dünn, ihre Dicke in z-Richtung ist z.B. kleiner als 10 mm. Sie befindet sich oberhalb der Tischplatte 21. Der lichte Abstand in z-Richtung zwischen Unterarmplatte 26 und Tischplatte 21 ist möglichst gering, vorzugsweise kleiner als 5 mm. Auch bei in Extrempositionen befindlicher Unterarmplatte 26 befindet sich diese stets oberhalb der Oberfläche der Tischplatte 21, bei Blickrichtung in z-Richtung erscheint kein freier Spalt zwischen dem Rand der Unterarmplatte 26 und einer Aussparung in der Tischplatte 21.

Die Unterarmplatte 26 ist in y-Richtung mindestens 20 % länger als in x-Richtung. Die Unterarmplatte 26 steht in negativer y-Richtung gegenüber einer dem Bediener 19 zugewandten Vorderkante des Tisches 20 zum Bediener 19 hin vor, beispielsweise über mindestens 5, insbesondere über mindestens 10 cm. Dies gilt für die Neutralstellung der Unterarmplatte 26.

Die Unterarmplatte 26 ist über einen Sensor 30, der die Bewegung in der x-Richtung erfasst und über einen Sensor 30, der die Bewegung in der y-Richtung erfasst, mit dem Halteteil 24 verbunden. Dadurch wird der Weg, den die Unterarmplatte 26 gegenüber ihrer Nullstellung in x-Richtung und gegenüber ihrer Nullstellung in y-Richtung verfahren wird, erfasst. Die Messwerte der Sensoren 30 werden einem Computer zugeleitet, dieser kann im Monitor 22 integriert sein. Dieser Computer ist mit einer Steuervorrichtung für den Roboter, wie sie vom Hersteller des Roboters geliefert wird, verbunden.

Die Unterarmplatte 26 hat auf ihrer Oberseite zwei in y-Richtung hintereinander angeordnete und beabstandete Auflagen 36. Sie dienen der Auflage des Unterarms eines Bedieners 19. Sie sind insbesondere durch um die y-Richtung gebogene Teile gebildet, die beispielsweise ausgangs Kreisscheiben waren. Um die x-Richtung sind sie vorzugsweise nicht gebogen. Sie bilden eine sich in y-Richtung erstreckende Mulde. Die beiden Auflagen 36 sind in einem lichten Abstand in y-Richtung hintereinander angeordnet. Der Abstand liegt im Bereich zwischen 3 und 12 cm. Sie bilden eine feste und präzise Auflage 36 für einen Unterarm eines Bedieners 19 über möglichst die gesamte Länge des Unterarms, zumindest über mehr als die Hälfte der Länge eines Unterarms. Anstelle von zwei oder mehr Auflagen 36 kann auch eine einzige Auflage 36 verwendet werden.

Vorzugsweise wird durch die mindestens eine Auflage 36 eine Abstützung über eine Strecke größer 5 cm, insbesondere größer 15 cm erreicht, so dass ein Unterarm bequem und mehr oder weniger vollständig über seine Länge abgestützt wird. Eine seitliche Bewegung des Unterarms, also eine Bewegung in x-Richtung, wird durch die Auflagen 36 und insbesondere durch die in die z-Richtung hochgezogenen Seitenbereiche 37 der Auflagen 36 behindert. Die mindestens eine Auflage 36 hat in z-Richtung eine Höhe von mindestens 2 cm, vorzugsweise mindestens 5 cm. Diese Höhe ist kleiner als 10 cm. Die Auflagen 36 bilden eine Mulde. Sie sind vorzugsweise durch einen Zylinder begrenzt. Die hochgezogenen Seitenbereiche 37 sind so ausreichend hoch, dass bei einer seitlichen Bewegung der Unterarm nicht von den Auflagen 36 abrutscht.

Vorzugsweise sind die Auflagen 36 gepolstert, beispielsweise mit Schaumstoff belegt und mit einer Abdeckung aus Stoff oder Leder oder Kunststoff versehen. Bei einer Bewegung in y-Richtung nimmt ein Unterarm die mindestens eine Auflage 36 nur reibschlüssig mit. Die Polsterung der mindestens einen Auflage 36 ist daher derart, dass eine ausreichende Reibung gegenüber einem bekleideten oder unbekleideten Unterarm erreicht wird. Bei einer Bewegung in x-Richtung kann dagegen auch mit Formschluss gearbeitet werden, muss aber nicht. Vorzugsweise sind hierfür die Seitenbereiche 37 vorgesehen, die einen Formschluss mit einem Unterarm bewirken. Ein Unterarm kann bequem in die Auflagen 36 eingelegt werden und ebenso bequem wieder nach oben herausgenommen werden.

In y-Richtung vor der mindestens einen Auflage 36 befindet sich ein Steuerhebel 40, der an der Unterarmplatte 26 befestigt ist und sich mit dieser bewegt. Im gezeigten Ausführungsbeispiel ist er gegenüber der Längsachse, die parallel zur y-Achse ist, der mindestens einen Auflage 36 um wenige Zentimeter, beispielsweise 2 bis 10 cm, in Richtung der negativen x-Achse versetzt. Diese Anordnung ist günstig für einen Rechtshänder. Bei einem Linkshänder würde man den Steuerhebel 40 spiegelbildlich zur x-z-Ebene auf der anderen Seite, also in positiver x-Richtung versetzt, anordnen. Der Versatz ist nicht notwendig. Er hat den Vorteil, dass die Vorrichtung anatomisch der Ausbildung eines Unterarms einschließlich der Hand besser angepasst ist, als eine Anordnung ohne Versatz.

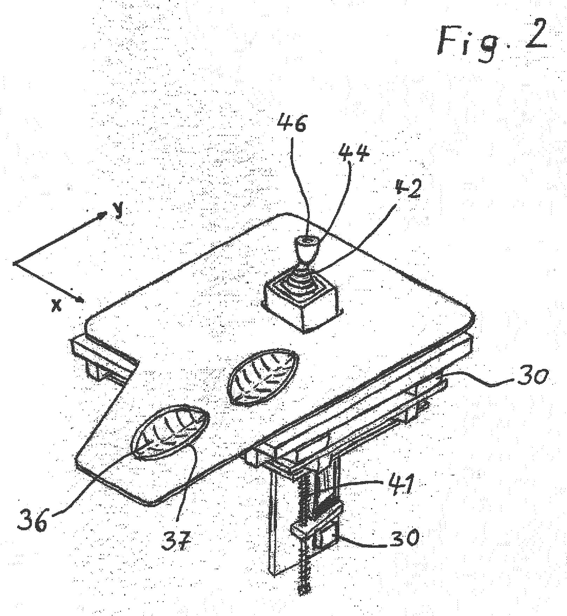

Der Steuerhebel 40 kann um die um die x-Achse gekippt (eine x-Kippbewegung) und um die y-Achse (y-Kippbewegung) gekippt werden. In einer anderen Ausbildung ist vorgesehen, ihn in Richtung der z-Achse nach oben und nach unten bewegbar anzuordnen. Der Steuerhebel 40 hat einen Stumpf 42, der diese beiden Kippbewegungen ausführen kann. Weiterhin kann der Stumpf 42 in z-Richtung gegenüber der Unterarmplatte 26 bewegt werden. Fig. 1 und 2 zeigen zwei Schraubenfedern 41, die für die Nullstellung der Bewegung des Steuerhebels 40 in z-Richtung verantwortlich sind. In entsprechender Weise wird die Nullstellung für alle anderen Bewegungsmöglichkeiten des Steuerhebels 40 und der Unterarmplatte 26 erreicht.

Am Stumpf 42 oben ist drehbar ein im Wesentlichen runder Kopf 44 angeordnet. Er kann um die z-Achse gedreht werden, unabhängig von einer Bewegung des Stumpfes 42. Er ist aber sonst nicht gegenüber dem Stumpf 42 bewegbar. Der Kopf 44 hat eine Grifffläche, sie ist ausgelegt, mit einer Hand, insbesondere zwischen Finger und Daumen, ergriffen zu werden. Auf dem Kopf 44 oben befindet sich ein Taster 46. Er bildet den Zustimmtaster. Allen Bewegungen des Stumpfes 42 bzw. des Kopfes 44 sind jeweils entsprechende Bewegungssensoren und in die Neutralstellung zurückführende elastische Mittel zugeordnet. So sind der x-Kippbewegung und der y-Kippbewegung entsprechende Sensoren zugeordnet. Weiterhin ist der Bewegung des Stumpfes 42 in z-Richtung ein Bewegungssensor zugeordnet. Schließlich ist auch die Drehbewegung des Kopfes 44 um die z-Achse durch einen Sensor 30 erfasst. Bei dem Taster 46 handelt es sich um einen normalen elektrischen Kontakt, er kann aber auch als berührungsempfindlicher Kontakt ausgebildet sein.

### Bezugszeichenliste

- 19: Bediener
- 20: Tisch
- 21: Tischplatte
- 22: Monitor
- 23: Roboter
- 24: Halteteil
- 25: Kabine
- 26: Unterarmplatte
- 27: Fenster
- 28: Drehachse
- 29: Roboterhand
- 30: Sensor
- 31: Düse
- 32: Hochdruckschlauch
- 33: Wasser
- 36: Auflage
- 40: Steuerhebel
- 41: Schraubenfeder
- 42: Stumpf/Unterteil
- 44: Kopf
- 46: Taster

## Patentansprüche

1. System umfassend einen Roboter(23) und eine Vorrichtung zum Steuern des Roboters, wobei die Roboterhand (29) des Roboters (23) mit einer Düse (31) zur Hochdruckreinigung mittels Wasser (33) verbunden ist, die Vorrichtung weist auf
- ein Halteteil (24),
- eine von dem Halteteil (24) getragene Unterarmplatte (26), die elastisch in eine Nullstellung vorbelastet ist und aus der Nullstellung gegenüber dem Halteteil (24) in der x-y-Ebene bewegbar ist,
- mindestens einen Sensor (30) für das Erfassen einer Bewegung der Unterarmplatte (26) in der x-y-Ebene gegenüber dem Halteteil (24),
- einen von der Unterarmplatte (26) getragenen Steuerhebel (40), der ausgehend von einer Neutralstellung, in die er elastisch vorbelastet ist, gegenüber der Unterarmplatte (26) zumindest eine, vorzugsweise mehrere der folgenden Bewegungen durchführt
- eine Kippbewegung um die x-Richtung und/oder um die y-Richtung,
- eine Verschiebebewegung in z-Richtung, und
- eine Drehbewegung um die z-Richtung,
und
- Sensoren (30) für die Erfassung der Bewegungen des Steuerhebels (40) gegenüber der Unterarmplatte (26).

2. System nach Anspruch 1, **dadurch gekennzeichnet, dass** der Steuerhebel (40) einen Kopf (44) und einen Stumpf (42) aufweist, dass der Kopf (44) vom Stumpf (42) getragen ist und gegenüber dem Stumpf (42) um die z-Richtung drehbar angeordnet ist, aber ansonsten nicht gegenüber dem Stumpf (42) bewegbar ist.

3. System nach einem der vorangegangenen Ansprüche, **dadurch gekennzeichnet, dass** der Kopf (44) eine Grifffläche für eine Hand einer Bedienperson (19) aufweist.

4. System nach einem der vorangegangenen Ansprüche, **dadurch gekennzeichnet, dass** der Kopf (44) einen Taster (46) aufweist, der in seinem oberen Bereich angeordnet ist.

5. System nach einem der vorangegangenen Ansprüche, **dadurch gekennzeichnet, dass** der Steuerhebel (40) um mindestens eine beliebige, in der x-y-Ebene liegende Schwenkachse gegenüber der Unterarmplatte (26) schwenkbar ist.

6. System nach einem der vorangegangenen Ansprüche, **dadurch gekennzeichnet, dass** sie Sensoren (30) für jede einzelne der Auslenkbewegungen der Unterarmplatte (26) und des Steuerhebels (40) aufweist, wobei jeweils ein Sensor vorgesehen ist, der das Maß einer Auslenkung aus der Nullstellung bzw. der Neutralstellung erfasst.

7. System nach einem der vorangegangenen Ansprüche, **dadurch gekennzeichnet, dass** die Unterarmplatte (26) mindestens eine Auflage (36) für einen Unterarm einer Bedienperson (19), insbesondere zwei in einer Linie hintereinander angeordnete Auflagen (36) aufweist.

8. System nach Anspruch 1, **dadurch gekennzeichnet, dass** der Steuerhebel (40) in der x-y-Ebene um 2-10 cm gegenüber einer Längsachse der mindestens einen Auflage (36) in y-Richtung versetzt angeordnet ist, insbesondere dass er für eine rechtsarmige Vorrichtung bei Blickrichtung von der Auflage (36) zum Steuerhebel (40) nach links gegenüber der Längsachse versetzt ist.

9. System nach Anspruch 1, **dadurch gekennzeichnet, dass** der Steuerhebel (40) eine höchste Stelle aufweist, die in z-Richtung mindestens 3-10 cm höher ist als die mindestens eine Auflage (36), und dass die höchste Stelle vorzugsweise durch einen Kopf (44) gebildet ist.

10. System nach Anspruch 5 oder 6, **dadurch gekennzeichnet, dass** der Abstand zwischen der mindestens einen Auflage (36) für einen Unterarm und dem Steuerhebel (40) zwischen 5 und 30 cm beträgt und der Anatomie eines Unterarms eines Menschen angepasst ist, wobei der Unterarm auf der mindestens einen Auflage (36) aufliegt und eine Hand den Steuerhebel (40) greift.

11. System nach einem der vorangegangenen Ansprüche, **dadurch gekennzeichnet, dass** das Halteteil (24) an der Tischplatte (21) eines Tisches (20) befestigt ist, und dass die Unterarmplatte (26) parallel zur Tischplatte (21) verläuft und sich oberhalb dieser befindet.

## Claims

1. A system comprising a robot (23) and a device for controlling the robot, wherein the robotic hand (29) of the robot (23) is connected to a nozzle (31) for high-pressure cleaning by means of water (33), the device comprising
- a retaining part (24),
- a forearm panel (26), which is supported by the retaining part (24) and is elastically biased into a zero position and can be moved from the zero position in the x-y-plane relative to the retaining part (24),
- at least one sensor (30) for detecting a movement of the forearm panel (26) in the x-y-plane relative to the retaining part (24),
- a control lever (40), which is supported by the forearm panel (26) and which, starting from a neutral position in which it is elastically biased, executes at least one, preferably several of the following movements relative to the forearm panel (26):
- a tilting movement about the x-direction and/or about the y-direction,
- a sliding movement in the z-direction, and
- a rotary movement about the z-direction, and
- sensors (30) for detecting the movements of the control lever (40) relative to the forearm panel (26).

2. The system according to claim 1, **characterized in that** the control lever (40) has a head (44) and a stub (42), that the head (44) is supported by the stub (42) and is disposed so as to be rotatable, relative to the stub (42), about the z-direction, but is otherwise not movable relative to the stub (42).

3. The system according to any one of the preceding claims, **characterized in that** the head (44) has a grip surface for a hand of an operator (19).

4. The system according to any one of the preceding claims, **characterized in that** the head (44) has a button (46) disposed in its upper region.

5. The system according to any one of the preceding claims, **characterized in that** the control lever (40) is pivotable, relative to the forearm panel (26), about at least one arbitrary pivot axis located in the x-y-plane.

6. The system according to any one of the preceding claims, **characterized in that** it has sensors (30) for each individual one of the deflection movements of the forearm panel (26) and the control lever (40), wherein one sensor is provided in each case which measures the amount of a deflection from the zero position or the neutral position.

7. The system according to any one of the preceding claims, **characterized in that** the forearm panel (26) has at least one support (36) for a forearm of an operator (19), in particular two supports (36) disposed in an aligned manner one behind the other.

8. The system according to claim 1, **characterized in that** the control lever (40), in the x-y-plane, is offset in the y-direction by 2-10 cm relative to a longitudinal axis of the at least one support (36), in particular, that, for a right-armed device and given a viewing direction from the support (36) towards the control lever (40), it is offset towards the left relative to the longitudinal axis.

9. The system according to claim 1, **characterized in that** the control lever (40) has a highest point which, in the z-direction, is at least 3-10 cm higher than the at least one support (36), and that the highest point is preferably formed by a head (44).

10. The system according to claim 5 or 6, **characterized in that** the distance between the at least one support (36) for a forearm and the control lever (40) is between 5 and 30 cm and is adapted to the anatomy of a human forearm, wherein the forearm rests on the at least one support (36) and one hand grips the control lever (40).

11. The system according to any one of the preceding claims, **characterized in that** the retaining part (24) is attached to the tabletop (21) of a table (20), and that the forearm panel (26) extends parallel to the tabletop (21) and is located above the latter.

## Revendications

1. Système comprenant un robot (23) et un dispositif de commande du robot,dans lequel la main de robot (29) du robot (23) est reliée à une buse (31) de nettoyage haute pression au moyen d'eau (33), le dispositif présente
- une partie de maintien (24),
- une plaque d'avant-bras (26) qui est portée par ladite partie de maintien (24) et qui est précontrainte élastiquement dans une position zéro et peut être déplacée à partir de la position zéro par rapport à la partie de maintien (24) dans le plan x-y,
- au moins un capteur (30) destiné à détecter un mouvement de la plaque d'avant-bras (26) dans le plan x-y par rapport à la pièce de maintien (24),
- un levier de commande (40) qui est porté par la plaque d'avant-bras (26) et qui effectue, à partir d'une position neutre dans laquelle il est précontrainte élastiquement, au moins un, de préférence plusieurs, des mouvements suivants par rapport à la plaque d'avant-bras (26),
- un mouvement de basculement autour de la direction x et/ou autour de la direction y,
- un mouvement de déplacement dans la direction z, et
- un mouvement de rotation autour de la direction z, et
- des capteurs (30) destinés à détecter les mouvements du levier de commande (40) par rapport à la plaque d'avant-bras (26).

2. Système selon la revendication 1, **caractérisé par le fait que** le levier de commande (40) présente une tête (44) et un tronc (42), que la tête (44) est portée par ledit tronc (42) et est disposée à rotation autour de la direction z par rapport au tronc (42), mais n'est pas autrement déplaçable par rapport au tronc (42).

3. Système selon l'une quelconque des revendications précédentes, **caractérisé par le fait que** la tête (44) présente une surface de préhension (46) pour une main d'un opérateur (19).

4. Système selon l'une quelconque des revendications précédentes, **caractérisé par le fait que** la tête (44) présente un bouton-poussoir (46) qui est disposé dans sa zone supérieure.

5. Système selon l'une quelconque des revendications précédentes, **caractérisé par le fait que** le levier de commande (40) peut pivoter par rapport à la plaque d'avant-bras (26) autour d'au moins un axe de pivotement quelconque situé dans le plan x-y.

6. Système selon l'une quelconque des revendications précédentes, **caractérisé par le fait qu'**il comprend des capteurs (30) pour chacun des mouvements de déviation de la plaque d'avant-bras (26) et du levier de commande (40), dans lequel respectivement un capteur est prévu qui détecte la mesure d'une déviation à partir de la position zéro ou bien de la position neutre.

7. Système selon l'une quelconque des revendications précédentes, **caractérisé par le fait que** la plaque d'avant-bras (26) présente au moins un support (36) pour un avant-bras d'un opérateur (19), en particulier deux supports (36) disposés en une ligne l'un derrière l'autre.

8. Système selon la revendication 1, **caractérisé par le fait que** le levier de commande (40) est disposé de manière décalée dans le plan x-y de 2 à 10 cm par rapport à un axe longitudinal dudit au moins un support (36) dans la direction y, en particulier que, pour un dispositif de bras droit, vu depuis ledit support (36) vers le levier de commande (40), il est décalé vers la gauche par rapport à l'axe longitudinal.

9. Système selon la revendication 1, **caractérisé par le fait que** le levier de commande (40) présente un point le plus haut qui est au moins 3 à 10 cm plus haut dans la direction z que ledit au moins un support (36), et que ledit point le plus haut est constitué de préférence par une tête (44).

10. Système selon la revendication 5 ou 6, **caractérisé par le fait que** la distance séparant ledit au moins un support (36) pour un avant-bras et ledit levier de commande (40) est comprise entre 5 et 30 cm et est adaptée à l'anatomie d'un avant-bras d'une personne, dans lequel l'avant-bras repose sur ledit au moins un support (36) et une main saisit le levier de commande (40).

11. Système selon l'une quelconque des revendications précédentes, **caractérisé par le fait que** la partie de maintien (24) est fixée sur le plateau de table (21) d'une table (20), et que la plaque d'avant-bras (26) s'étend parallèlement au plateau de table (21) et est située au-dessus de celui-ci.
